# EUROPÄISCHE PATENTSCHRIFT

(11) **EP 4 118 466 B1**
(45) Veröffentlichungstag und Bekanntmachung des Hinweises auf die Patenterteilung: **27.08.2025**
(21) Anmeldenummer: 21712427.0
(22) Anmeldetag: 10.03.2021
(51) Int. Cl.: G02B 3/00

(54) **LENTIKULARLINSEN-BAUGRUPPE ZUM ANBRINGEN AN EINER ANZEIGEFLÄCHE UND METHODE DER ANBRINGUNG**
LENTICULAR LENS ASSEMBLY FOR MOUNTING ON A DISPLAY SURFACE AND MOUNTING METHOD
ENSEMBLE LENTILLE LENTICULAIRE À MONTER SUR UNE SURFACE D'AFFICHAGE ET PROCÉDÉ DE MONTAGE

(30) Priorität: 13.03.2020 DE 102020203286
(43) Veröffentlichungstag der Anmeldung: 18.01.2023
(73) Patentinhaber: 3D Global Holding GmbH, 73431 Aalen (DE)
(72) Erfinder: DÄHNERT, Ulrich, 09514 Pockau-Lengefeld OT Wünschendorf (DE); SCHWARZ, Jürgen, 99519 Apolda (DE); SIGWART, Johannes, 78166 Donaueschingen (DE)
(74) Vertreter: Patentanwälte Bressel und Partner mbB
(86) Internationale Anmeldenummer: PCT/EP2021/055993
(87) Internationale Veröffentlichungsnummer: WO 2021/180762

(56) Entgegenhaltungen:
- EP-A1- 0 936 495
- EP-A2- 0 658 779
- EP-A2- 0 965 862
- WO-A1-2017/071007
- WO-A1-2017/071008
- CN-B- 103 529 496

## Beschreibung

Die Erfindung betrifft das technische Gebiet der optischen Filter für Anzeigeflächen, wie sie z.B. zur Anzeige digital codierter grafischer Inhalte verwendet werden. Genauer gesagt betrifft die Erfindung eine Lentikularlinsen-Baugruppe und ein Verfahren zum Anbringen einer solchen Lentikularlinsen-Baugruppe an einer Anzeigefläche. Die Lentikularlinsen-Baugruppe und insbesondere die nachstehend erläuterte Lentikularlinsenschicht bildet dabei einen optischen Filter.

Es ist bekannt, dass auf einer Anzeigefläche angezeigte Inhalte mittels verschiedener Ansätze dreidimensional dargestellt werden können. Insbesondere können sie derart optisch gefiltert, verändert und/oder gebrochen werden, dass sie aus Sicht eines Betrachters dreidimensional wirken.

Ein Beispiel optischer Filter sind sogenannte Parallaxbarrieren, bei denen z.B. pixelweise angezeigte Inhalte derart partiell verdeckt werden, dass ein linkes und ein rechtes Auge eines Betrachters unterschiedliche Bildinhalte sehen, was eine dreidimensionale Wahrnehmung hervorruft.

Ebenso bekannt sind Lentikularlinsen, die auch als Linsenrasterbild oder Prismenrasterbild bezeichnete Bilder erzeugen können, die dreidimensional (d. h. räumlich) wahrgenommen werden. Die Lentikularlinse verfügt über eine Mehrzahl typischerweise gewölbter Linsenabschnitte, die streifenförmig aneinandergereiht sind und z.B. in einer gemeinsamen Raumrichtung und/oder entlang einer Hochachse der Anzeigefläche verlaufen. Durch die Linsenabschnitte wird das Licht der Anzeigefläche und insbesondere von benachbarten Pixeln oder Anzeigeeinheiten dieser Fläche unterschiedlich gebrochen. Dies erfolgt erneut bevorzugt derart, dass das linke und rechte Auge eines Betrachters unterschiedliche Bildinhalte wahrnehmen, was einen dreidimensionalen Eindruck eines angezeigten Bildes hervorrufen kann.

Ein gemeinsamer Vorteil dieser Lösungen ist, dass mit der Anzeigefläche dreidimensional wahrnehmbare Bildinhalte angezeigt werden können, ohne dass ein Betrachter z.B. zwingend eine sogenannte 3D-Brille oder andere optische Hilfsmittel tragen bzw. aufsetzen muss. Die geschilderten Ansätze können dem Gebiet der Autostereoskopie zugeordnet werden.

Bei den Anzeigeflächen handelt es sich typischerweise um ebene Vorrichtungen mit mehreren einzeln ansteuerbaren und typischerweise matrixförmig verteilten Anzeigeeinheiten. Jede Anzeigeeinheit kann dabei ein Pixel der Anzeigefläche bilden. Beispielsweise kann die Anzeigefläche ein LCD-Panel ein OLED-Panel oder dergleichen sein.

Es ist bekannt, dass die Anzeigeflächen fertigungsbedingt nicht immer eben ausgebildet sind, d.h. eine dem Betrachter zugewandte unebene Oberfläche aufweisen können. Dies ist nachteilig, da dann eine unerwünschte Relativausrichtung von Bereichen der Anzeigefläche und insbesondere einzelnen Anzeigeeinheiten (Pixeln) und einer Lentikularlinsenschicht auftreten können. Dies kann die gewünschte dreidimensionale Darstellung erschweren.

Es ist daher bekannt, zusätzlich zu einer panelförmigen bzw. flächigen Linsenschicht ein scheibenförmiges Element an der einem Betrachter zugewandten oder der dem Betrachter abgewandten (rückseitigen) Oberfläche der Anzeigefläche anzubringen. Beispielsweise kann dieses Element vollflächig mit der Anzeigefläche verklebt werden, da es typischerweise eine höhere Steifigkeit als die deformierbare Anzeigefläche und insbesondere als eine biegsame LCD-Anzeigefläche aufweist. Die Anzeigefläche passt sich dann der Form der Scheibe an, die vorzugsweise eben ist. Anders ausgedrückt kann also die Anzeigefläche durch das scheibenförmige Element geglättet werden. Auf eine nach außen weisende bzw. dem Betrachter zugewandte und von der Anzeigefläche abgewandte Oberfläche des scheibenförmigen Elements wird dann nachträglich die Linsenschicht aufgebracht.

Es erfolgt also ein schrittweises Vorgehen z.B. innerhalb einer automatisierten Fertigungslinie, bei dem zunächst das scheibenförmige Element (Glättungs-Element) und anschließend die Linsenschicht bzw. Linsenscheibe an der dann geglätteten Anzeigefläche aufgebracht werden.

Prinzipiell bekannt ist es auch, anschließend in einem weiteren Herstellungsschritt noch eine Art Schutzschicht oder auch Schutzscheibe auf die Linsenstruktur selbst aufzubringen. Diese ist vorzugsweise wiederum glatt, sodass eine nach außen ebene Oberfläche gebildet wird und die gewölbten Linsenabschnitte sozusagen nicht freiliegen bzw. nicht von außen direkt zugänglich sind.

Es hat sich jedoch gezeigt, dass mit derartigen bisherigen Ansätzen nicht immer eine gewünschte (dreidimensionale) Anzeigequalität erzielbar bzw. ein Lentikulareffekt nicht immer in der gewünschten Weise erreichbar ist. Auch ist die geschilderte aufeinanderfolgende Fertigung durch einzelnes Schichten-Aufbringen für das Herstellen bzw. Beschichten verschiedenartiger Anzeigeflächen nicht immer ausreichend flexibel und bedingt allgemein eine erhöhte Komplexität einer Endfertigungslinie. Das Dokument EP-A2-0658779 offenbart eine Lentikularlinsen-Baugruppe für eine Anzeigefläche.

Es besteht somit ein Bedarf dafür, das Darstellen dreidimensionaler Inhalte mittels Anzeigeflächen zu verbessern und insbesondere deren Herstellung flexibler und weniger komplex zu gestalten.

Diese Aufgabe wird mit den Gegenständen der beigefügten unabhängigen Ansprüche gelöst. Vorteilhafte Weiterbilden sind in den abhängigen Ansprüchen definiert. Sämtliche der vorstehenden Erläuterungen und Merkmale können auch auf die vorliegende Lösung zutreffen bzw. bei dieser vorgesehen sein, sofern nicht anders angegeben oder ersichtlich.

Erfindungsgemäß wurde erkannt, dass das Anbringen bisher verwendeter scheibenförmiger Glättungs-Elemente nicht immer möglich ist, wenn eine Mindestdarstellungsqualität eingehalten werden soll. So sollten zum Erreichen eines gewünschten Lentikulareffekts bzw. einer ausreichenden (dreidimensionalen) Anzeigequalität maximal zulässige Abstände zwischen der Anzeigefläche und der Lentikularlinsenschicht bestenfalls nicht überschritten werden. Diese Abstände können abhängen z.B. von der Pixelgröße oder auch Pixeldichte der Anzeigefläche, von Eigenschaften der verwendeten Materialien, von geometrischen Parameter (insbesondere der Linsenschicht) oder auch von einer Art der Ansteuerung der einzelnen Anzeigeeinheiten (Pixel) der Anzeigefläche, beispielsweise einem Multiplexschema. Auch ein gewünschter bzw. vorgesehener Abstand des Betrachters zur Anzeigefläche kann eine Rolle spielen.

Insbesondere wurde erkannt, dass bei sehr hohen Pixeldichten von mehr als 100 ppi (Pixel per Inch) und insbesondere mehr als 150 ppi oder mehr als 200 ppi besonders geringe Abstände zwischen der Linsenschicht und insbesondere deren gewölbten Linsenabschnitt und der Anzeigefläche vorteilhaft sein können. Prinzipiell könnte dies dadurch erreicht werden, dass die Linsenschicht derart angeordnet wird, dass deren gewölbte Linsenabschnitte der Anzeigefläche zugewandt sind bzw. gegenüberliegen. Dann kann es aber nicht immer möglich sein, bisherige scheibenförmige Glättungs-Elemente noch zwischen der Linsenschicht und der Anzeigefläche anzubringen, ohne dass ein zulässiger Maximalabstand zwischen den Linsen und der Anzeigefläche überschritten wird. Dies wird durch die nachstehend erläuterte erfindungsgemäße mehrschichtige Lösung gelöst.

Zum Erreichen optischer Brechungseffekte ist außerdem ein ausreichender Unterschied der Brechungsindizes zwischen den Linsenwölbungen bzw. gewölbten Linsenabschnitten und einem unmittelbar angrenzenden Material vorzuziehen. Sollen aber die gewölbten Linsenabschnitte der Anzeigefläche zugewandt werden, wie vorstehend beschrieben, ergeben sich Befestigungsprobleme, da eine vollflächige Verklebung mit herkömmlichen Materialien die bereitzustellende Differenz der Brechungsindizes erschweren kann. Ausführungsformen der Erfindung schlagen deshalb eine neuartige und nachstehend erläuterte mehrschichtige Struktur vor.

Grundsätzlich wurde erfindungsgemäß auch erkannt, dass die Komplexität der Herstellungsverfahren (dreidimensionaler) Anzeigeflächen dadurch reduziert werden kann, dass die auf die Anzeigefläche aufgebrachten Schichten nicht mehr z.B. innerhalb einer Endfertigungslinie aufeinanderfolgend aufgebracht und einzeln verklebt werden, sondern zumindest teilweise bereits als vorgefertigte Module bzw. Baugruppen bereitgestellt werden. Hierdurch kann die Anzahl erforderlicher Fertigungsschritte und Fertigungsstationen reduziert werden.

Insbesondere schlägt die Erfindung eine vorgefertigte Lentikularlinsen-Baugruppe vor, bei der mehrere Schichten bereits miteinander verbunden und insbesondere miteinander verklebt sind. Diese Baugruppe kann dann als solches bzw. in einem einzigen Schritt geschlossen auf die Anzeigefläche aufgebracht werden.

Weiter ist diese Baugruppe vorteilhafterweise derart ausgebildet, dass sie auch auf eine Mehrzahl unterschiedlicher Anzeigeflächen aufbringbar ist und insbesondere je nach den Anforderungen und/oder Eigenschaften der Anzeigefläche unterschiedlich (z.B. mit einer unterschiedlichen Orientierung und/oder Seite) an der Anzeigefläche anbringbar ist. Beispielsweise kann die Baugruppe je nach Pixeldichte der Anzeigefläche entweder mit einer ersten Oberfläche oder einer ersten Seite an der Anzeigefläche angebracht bzw. dieser zugewandt ausgerichtet werden oder aber mit einer zweiten Oberfläche und/oder Seite. Insbesondere können dann je nach entsprechender Orientierung der Baugruppe unterschiedliche Abstände zwischen der Anzeigefläche und einer Lentikularlinsenschicht bzw. den gewölbten Linsenabschnitten dieser Baugruppe eingestellt werden, beispielsweise da der Abstand dieser (inneren) Schicht zu den entsprechenden Oberflächen bzw. Seiten der Baugruppe unterschiedlich ist.

Insgesamt wird eine kompakte, vorfertigbare Baugruppe bereitgestellt, die die Anforderungen an eine Endfertigungslinie reduziert, die aber flexibel einsetzbar ist. Insbesondere wird ermöglicht, dass für die verschiedenen Einsatzzwecke bzw. Orientierungen der Baugruppe der Fertigungsprozess bzw. die hierfür verwendeten Fertigungsstationen oder -vorrichtungen nur begrenzt oder auch gar nicht angepasst werden müssen (zum Beispiel wenn die Baugruppe mit der gewünschten Orientierung angeliefert und/oder zugeführt wird).

Im Detail wird eine vorgefertigte Lentikularlinsen-Baugruppe zum Anbringen an einer (z.B. digitalen und/oder ein Pixelraster aufweisenden) Anzeigefläche vorgeschlagen, mit
- einer Lentikularlinsenschicht, die eine erste Oberfläche mit mehreren gewölbten Linsenabschnitten und eine zweite Oberfläche umfasst, die von der ersten Oberfläche abgewandt ist;
- einer Deckschicht, die zumindest bereichsweise der ersten Oberfläche der Linsenschicht gegenüberliegt;
- einer Trägerschicht, die zumindest bereichsweise der zweiten Oberfläche der Linsenschicht gegenüberliegt.

Eine solche Lentikularlinsen-Baugruppe bietet aufgrund ihrer Vorfertigung den Vorteil, dass in einer Endfertigungslinie keine gesonderten Fertigungsstationen bzw. Fertigungsschritte zum Aufbringen jeder einzelnen entsprechenden Schicht vorgesehen werden müssen. Innerhalb der Lentikularlinsen-Baugruppe können stattdessen die Lentikularlinsenschicht, Deckschicht und Trägerschicht miteinander verbunden und insbesondere fest verbunden sein, sodass sie sich z.B. unter Eigengewicht nicht voneinander lösen können. Wie hierin noch geschildert, kann insbesondere eine stoffschlüssige Verbindung (beispielsweise eine Verklebung) zwischen den Schichten bzw. der Schichten aneinander vorgesehen sein.

Genauer gesagt ist vorzugsweise vorgesehen, dass die Lentikularlinsenschicht, die Deckschicht und die Trägerschicht miteinander verbunden sind, auch wenn die Baugruppe noch nicht an der Anzeigefläche angebracht wurde oder ist. Anders ausgedrückt können die genannten Schichten bereits dann miteinander verbunden sein und z.B. aneinander anhaften, aneinandergeklebt sein und/oder innerhalb der Baugruppe fixiert sein, bevor die Baugruppe an die Anzeigefläche angebracht wird. Stattdessen kann die Baugruppe auch in einer separaten Fertigungslinie, von einem separaten Hersteller oder allgemein räumlich und/oder zeitlich getrennt vorgefertigt werden. Sie kann dann z.B. auch zwischengelagert werden und/oder zur Endfertigungslinie einer Anzeigevorrichtung mit der entsprechenden Anzeigefläche transportiert werden. Dort kann sie als solches bzw. als gesamtes sowie in einem vorzugsweise lediglich einzigen Fertigungsschritt an der Anzeigefläche angebracht werden, sodass die dortige Fertigungskomplexität reduziert wird.

Wie erwähnt, kann es sich bei der Anzeigefläche um eine digitale und/oder elektronische Anzeigefläche und insbesondere um einen Computerbildschirm handeln. Beispielsweise kann die Anzeigefläche für ein mobiles Endgerät, einen TV- oder Computerbildschirm, ein Tablet-Bildschirm oder ein Smartphone-Bildschirm vorgesehen sein bzw. eine dortige Anzeigefläche bilden. Das Anbringen der Baugruppe an der Anzeigefläche kann ein Verkleben umfassen, insbesondere ein zumindest bereichsweises oder aber auch vollflächiges Verkleben der Baugruppe mit der Anzeigefläche.

Jegliche hierin geschilderte Schicht kann sich dadurch auszeichnen, dass sie eine flächige Gestalt und/oder Erstreckung aufweist (gegebenenfalls aber mit gewölbten Oberflächenabschnitten). Im Vergleich zu dieser typischerweise zweidimensionalen Erstreckung kann jegliche Schicht eine geringere Dicke aufweisen (in Querrichtung zur zweidimensionalen Erstreckung). Diese Dicke kann zum Beispiel weniger als 10 % der zweidimensionalen Abmessungen umfassen. Die Form und/oder Größe der Schichten bzw. hiervon definierter zweidimensionaler Flächen kann derjenigen der Anzeigefläche entsprechen.

Die Schichten sind vorzugsweise eben ausgebildet, aber nicht zwingend formsteif. Beispielsweise können sie auch als Folien ausgebildet sein. Letzteres kann insbesondere auf die Deckschicht zutreffen, die gemäß nachstehender Ausführungsformen optional vor einem Anbringen an der Anzeigefläche manuell entfernbar sein kann, was durch eine folienartige Ausgestaltung erleichtert wird.

Die erste und zweite Oberfläche der Lentikularlinsenschicht können auch als erste und zweite Seite, z.B. Vorder- und Rückseite, der Linsenschicht bezeichnet werden.

Die Linsenabschnitte können allgemein konvex gewölbt sein. Die Linsenabschnitte können prinzipiell gleichartig ausgebildet sein sowie aneinander anschließen. Auf diese Weise kann sich ein gleichförmiges (Linien-) Raster oder auch Muster aus aneinandergereihten Linsenabschnitten ergeben, wie dies im Stand der Technik bekannt ist. Durch die entsprechende Wölbung kann Licht, das von einer Anzeigefläche und insbesondere von unter einem Linsenabschnitt liegenden Pixeln ausgesendet wird, derart gebrochen werden, dass das linke und rechte Auge eines Betrachters unterschiedliche Bildinhalte wahrnehmen.

Allgemein kann vorgesehen sein, dass ein Linsenabschnitt mehrere Nachbarpixel überspannt, wobei aufgrund der Linsenwölbung das Licht der benachbarten Pixel auch unterschiedlich voneinander gebrochen werden kann.

Die Deckschicht kann die erste (gewölbte) Oberfläche der Linsenschicht zumindest bereichsweise verdecken und/oder abdecken. Von außen betrachtet kann die Lentikularlinsen-Baugruppe im Bereich der Deckschicht eine glatte und/oder ebene Oberfläche aufweisen, die durch die Deckschicht gebildet wird. Insbesondere kann die Wölbung der Linsenabschnitte nicht an einer Außenfläche der Baugruppe ausgeprägt sein bzw. freiliegen, sondern stattdessen durch die Deckschicht verdeckt und/oder abgeschirmt werden.

Allgemein kann vorgesehen sein, dass die Deckschicht und Trägerschicht Außenseiten bzw. Außenflächen der Baugruppen zumindest anteilig bilden, insbesondere einander gegenüberliegenden Flächen bzw. Seiten der Baugruppe.

Die Lentikularlinsen-Baugruppe ist vorzugsweise wahlweise derart an der Anzeigefläche anbringbar, dass entweder die Deckschicht (oder eine Baugruppen-Seite oder -Fläche, von der die Deckschicht entfernt wurde) oder aber die Trägerschicht der Anzeigefläche gegenüberliegt und/oder mit dieser verklebt wird. Je nach der gewählten Orientierung der Baugruppe kann dann die erste Oberfläche der Lentikularlinsenschicht bzw. können die gewölbten Linsenabschnitte weiter entfernt (insbesondere bei Anbringen der Trägerschicht an der Anzeigefläche) oder aber näher (insbesondere bei Anbringen der Deckschicht oder der Seite, von der die Deckschicht entfernt wurde, an der Anzeigefläche) zu der Anzeigefläche positioniert werden.

Erfindungsgemäß kann diese wahlweise Orientierung der Baugruppe beispielsweise dadurch ermöglicht werden, dass sowohl die Deckschicht als auch die Trägerschicht eben und/oder glatt ausgebildet sind. Zusätzlich oder alternativ sind sie bevorzugt ferner derart ausgestaltet, dass sie keine unerwünschten Lichtbrechungen (insbesondere den Lentikulareffekt negativ beeinträchtigende Lichtbrechungen) erzeugen. Hierfür sind die Schichten vorzugsweise nicht zusätzlich äußerlich beschichtet (zum Beispiel mit einer sogenannten AntiGlare-Schicht) oder eine solche Zusatzschicht wird erst dann angebracht, wenn die Festlegung hinsichtlich der einzunehmenden Orientierung erfolgt ist.

Ein weiterer allgemeiner Vorteil einer glatten und/oder ebenen Ausbildung von Deckschicht und/oder Trägerschicht ist, dass eine zuverlässige Glättungswirkung bezüglich der Anzeigefläche erzielbar ist. Insbesondere kann diese dann gleichmäßig geglättet werden, sodass auch ein gleichmäßiger Abstand zwischen Anzeigefläche und zum Beispiel der Linsenschicht herstellbar ist. Dies gilt auch, wenn die Deckschicht von einer Seite bzw. Fläche der Baugruppe entfernt wird. Diese freigelegte Seite kann aufgrund der bevorzugt ebenen Deckschicht ebenfalls entsprechend glatt sein.

Die Baugruppe kann auch als Sandwich oder Sandwichfilter bezeichnet werden. Dies trägt dem Umstand Rechnung, dass die Lentikularlinsenschicht vorzugsweise zwischen der Deckschicht und Trägerschicht positioniert und/oder eingeschlossen ist. Insbesondere kann keine weitere Schicht, mit Ausnahme einer etwaigen Klebschicht oder nachstehend erläuterter optionaler Füllmaterialen in einem Zwischenraum zwischen Lentikularlinsenschicht und Deckschicht, von der Baugruppe umfasst sein oder zumindest zwischen der Deckschicht und Trägerschicht angeordnet sein, außer eben die Lentikularlinsenschicht. Die Lentikularlinsenschicht kann also direkt zwischen der Trägerschicht und Deckschicht angeordnet und/oder eingebettet sein. Hierdurch wird die Kompaktheit der Baugruppe erhöht.

Die Deckschicht bietet zunächst den Vorteil, dass sie die gewölbten Linsenabschnitte zumindest teilweise von der Umgebung abschirmt und somit z.B. vor Verschmutzungen oder Beschädigungen schützt (insbesondere bei Orientierung der Baugruppe, sodass die Deckschicht nach außen weist).

Wenn die Deckschicht, wie allgemein bevorzugt, eben ausgebildet ist, kann sie auch das Anbringen an der Anzeigefläche und insbesondere das flächige Anbringen und/oder flächige Verkleben an der Anzeigefläche erleichtern (insbesondere bei Orientierung der Baugruppe, sodass die Deckschicht nach innen weist bzw. an der Anzeigefläche angebracht wird).

Weiter kann die Deckschicht auch dazu dienen, das Eindringen einer Klebschicht in einen Zwischenraum zwischen benachbarten Linsenabschnitten zu verhindern (z.B. bis zu einem Fuß- oder Wurzelpunk der Wölbungen), beispielsweise wenn die Baugruppe an der Anzeigefläche verklebt wird (dann wiederum mit einer aus Sicht des Betrachters nach innen orientierten Deckschicht). Stattdessen kann mittels der Deckschicht ein definierter Materialübergang und somit eine gewünschte Brechungsindexdifferenz nahe bzw. an dem Linsenabschnitt geschaffen werden. Dies kann dadurch gelingen, dass der Zwischenraum zwischen der Linsenschicht und insbesondere deren erster Oberfläche und der Deckschicht durch Letztere von außen abgeschirmt wird. Wie nachstehend noch erläutert, kann sich in diesem Zwischenraum z.B. Luft befinden oder aber ein anderweitiges definiertes Material, das von der Deckschicht sozusagen dort gehalten und/oder von außen abgeschirmt werden kann.

Prinzipiell kann die Deckschicht auch (bei Anbringen an der Anzeigefläche) einen vorstehend erläuterten gewünschten Glättungseffekt zumindest anteilig bereitstellen.

Allgemein und insbesondere bei sämtlichen der vorangehenden Beispiele kann die Deckschicht formsteif und zum Beispiel scheibenartig ausgebildet sein. Sie kann allerdings auch formschlaff und/oder als eine Folie (Deckschicht-Folie) ausgebildet sein. Letzteres ist vorzugsweise dann vorgesehen, wenn in einem Zwischenraum zwischen der Lentikularlinsenschicht und der Deckschicht ein Material vorhanden ist (d. h. kein Vakuum oder lediglich Luft dort vorhanden ist). Das Material kann eine Adhäsionswirkung bereitstellen und/oder mit der Folie zumindest überwiegend per Adhäsion und vorzugsweise ohne Einsatz von zusätzlichem Klebstoff verbunden sein. Nach Entfernen der Deckschicht, was allgemein manuell und/oder mittels Kräften im manuell aufbringbaren Bereich erfolgen kann, kann die Adhäsionswirkung dieses Materials für ein Anhaften der Baugruppe an der Oberfläche der Anzeigefläche genutzt werden. Dies wird nachstehend noch im Zusammenhang mit einer gesonderten Weiterbildung näher erläutert.

Prinzipiell ist es auch im Fall einer entfernbaren Deckschicht vorzugsweise möglich, die Baugruppe mit unterschiedlichen Orientierung an einer Anzeigefläche anzubringen. Die Deckschicht kann bei entsprechender Orientierung nach außen (zum Betrachter hin) die hierin geschilderten allgemeinen Funktionen einer Deckschicht und insbesondere einen Verschmutzungsschutz bereitstellen. Vorteilhaft ist die Variante einer entfernbaren Deckschicht aber insbesondere bei Verwenden eines oben geschilderten Füllmaterials mit Adhäsionswirkung, da dann die Baugruppe ohne zusätzliche Klebstoffe an der Anzeigefläche anhaften kann. Dies spart Fertigungsmaterialien und Fertigungsschritte.

Die Trägerschicht ist, bezogen auf die gewölbten Linsenabschnitte, hingegen rückseitig an der Lentikularlinsenschicht angeordnet bzw. liegt dieser Rückseite (d. h. der zweiten Oberfläche) gegenüber. Allgemein ist die zweite Oberfläche der Linsenschicht vorzugsweise eben bzw. glatt ausgebildet. Gleiches gilt bevorzugt auch für die Trägerschicht.

Die Trägerschicht kann je nach Orientierung der Baugruppe relativ zur Anzeigefläche die Funktion eines vorstehend erläuterten scheibenförmigen Glättungselements übernehmen. Die Trägerschicht kann Allgemein einen stabilisierenden Effekt oder, mit anderen Worten, eine versteifende Wirkung für die Baugruppe bereitstellen. Dies ermöglicht auch, dass die Deckschicht z.B. vergleichsweise dünn und/oder weniger steif ausgebildet werden kann.

Bei Orientierung der Baugruppe, sodass die Deckschicht (oder eine Seite, von der diese entfernt wurde) der Anzeigeflächen gegenüberliegt, können die gewölbten Linsenabschnitte in einem geringen Abstand zur Anzeigefläche angeordnet werden (der im Wesentlichen der Dicke der Deckschicht entspricht, zum Beispiel zuzüglich eines etwaigen Abstand zwischen Deckschicht und Linsenabschnitten). Die Trägerschicht kann derart dimensioniert sein und/oder versteifend wirken, dass die Deckschicht trotz geringer Dicke bei Anbringen an der Anzeigefläche nach wie vor einen gewünschten Glättungseffekt bereitstellen kann, da sie zum Beispiel unterseitig von der Trägerschicht und/oder allgemein von der Baugruppe zumindest mittelbar gestützt wird. Ebenso kann die Trägerschicht aber eine freigelegte Seite der Baugruppe, die zum Beispiel aus einem Füllmaterial mit Adhäsionswirkung besteht und/oder von der die Deckschicht entfernt wurde, mittelbar stabilisieren oder stützen. Jegliche hierin erwähnten Schichten können zum Beispiel aus einem Glasmaterial, einem akkurat oder allgemein einem transparenten Kunststoff hergestellt sein. Insofern könnte auch statt von einer Deckschicht und Trägerschicht von einem Deckglas bzw. einem Trägerglas gesprochen werden. Die Deckschicht und/oder Trägerschicht können mit einer Antireflexionsbeschichtung versehen sein, insbesondere diejenige von Deckschicht und Trägerschicht, die von der Anzeigefläche abgewandt ist (d.h. die außenliegend positioniert wird). Im Falle einer folienartigen Ausbildung von insbesondere der Deckschicht kann die Materialstärke entsprechend gering gewählt sein und zum Beispiel weniger als 0,15 mm betragen.

Ein weiterer Vorteil der offenbarten Baugruppe ist, dass der Spielraum zur Wahl von Klebematerialien oder anderweitigen zwischen der Baugruppe und Anzeigefläche anzuordnenden Schichten bzw. Materialien, falls benötigt, vergrößert wird. Dies ergibt sich insbesondere aus den mittels der Deckschicht und/oder einem Füllmaterial zwischen Deckschicht und Linsenschicht definiert einstellbaren Materialübergang und somit der definiert einstellbaren Brechungsindexdifferenz im Bereich der gewölbten Linsenabschnitte (also der Differenz vom Material des Zwischenraums zwischen Linsenabschnitt und Deckschicht zum Material der Linsenabschnitte selbst). Beispielsweise kann dann auch auf Klebematerialien mit relativ hohem Brechungsindex zurückgegriffen werden, die auf dem vorliegenden technischen Gebiet verbreitet und vor allem günstig sind. Würde man diese direkt für eine Verklebung der gewölbten Linsenabschnitte verwenden (d.h. derart, dass sie an die Linsenabschnitte angrenzen und diese kontaktieren), könnte unter Umständen ein gewünschtes Brechungsverhalten nicht mehr erzielt und die Qualität der dreidimensionalen Darstellung gemindert werden.

Die entfernbare Deckschicht, und insbesondere eine Deckschicht-Folie, hat den Vorteil, dass innerhalb der Baugruppe ein Füllmaterial zwischen Linsenschicht und Deckschicht angeordnet ist/wird, insbesondere um eine gewünschte Brechungsindexdifferenz definiert einzustellen. Wie erwähnt, kann in diesem Fall aufgrund der vorhandenen Adhäsionswirkung des Füllmaterials dann auf zusätzliche Klebschichten zwischen Baugruppe und Anzeigeflächen auch gänzlich verzichtet werden, was auch das Einstellen eines gewünschten Brechungsverhaltens erleichtern kann.

Die Verbindung der Schichten innerhalb der Baugruppe kann mittelbar erfolgen, z.B. über ein Rahmen, Rahmenabschnitt oder anderweitige in einem Randbereich der Baugruppe verlaufende und vorzugsweise umlaufende Halterungen. Auch eine direkte Verbindung z.B. über Klebschichten bzw. Aneinanderkleben von zumindest einzelnen der Schichten ist möglich. Ist beispielsweise zwischen der Deckschicht und der Lentikularlinsenschicht eine derartige Klebschicht vorgesehen, so ist deren Brechungsindex bevorzugt niedrig (zum Beispiel weniger als 1,4), um die gewünschte Brechungsindexdifferenz zum Linsenmaterial zu ermöglichen.

Vorteilhafterweise ermöglicht die vorliegende Baugruppe aber, dass sich zwischen der Deckschicht und der Lentikularlinsenschicht Luft oder ein Vakuum befindet. Die Deckschicht ist dann vorzugsweise formsteif ausgebildet und/oder nicht entfernbar und insbesondere keine entfernbare Folie. Insbesondere kann vorgesehen sein, dass die Deckschicht nicht an der Lentikularlinsenschicht oder zumindest den gewölbten Linsenabschnitten anliegt. Dann kann an die gewölbten Linsenabschnitte insbesondere Luft oder Vakuum mit einem entsprechend geringen Brechungsindex angrenzen, um das gewünschte Brechungsverhalten der Linsenschicht zu erzielen.

Das zumindest mittelbare Verbinden der Lentikularlinsenschicht, Deckschicht und Trägerschicht innerhalb der Baugruppe kann derart erfolgen, dass diese (zumindest aber die Trägerschicht und Lentikularlinsenschicht) anschließend z.B. manuell und/oder per Muskelkraft nicht mehr oder zumindest nicht zerstörungsfrei voneinander trennbar sind. Nicht gelten kann dies für eine gegebenenfalls bewusst manuell entfernbare Deckschicht-Folie. Zumindest aber unter Eigengewicht (oder zum Beispiel bis mindestens zum Zwanzigfachen des Eigengewichts der Baugruppe) können die Schichten aneinanderhalten, und zwar vorzugsweise auch während des Anbring- bzw. Montageprozesses der Baugruppe an die Anzeigefläche.

Allgemein kann jegliche Bezugnahme hierin auf ein Gegenüberliegenden zweier Flächen auch ein gegenseitiges Anliegen und/oder Kontaktieren dieser Flächen umfassen, sofern nicht anders angegeben oder ersichtlich (beispielsweise da zwischen den Schichten noch weitere Materialien oder ein Zwischenraum vorhanden ist).

Eine Weiterbildung sieht vor, dass die Deckschicht dünner als die Trägerschicht und/oder die Lentikularlinsenschicht ist. Dabei bezieht sich der Begriff "dünner" auf die Schichtdicke. Insbesondere kann die Deckschicht nicht mehr als die Hälfte oder auch nicht mehr als 30 % der Schichtdicke der Trägerschicht und/oder der Lentikularlinsenschicht aufweisen. Hierdurch wird ermöglicht, dass die Deckschicht zwar ihre z.B. schützende und/oder abschirmende Funktion bereitstellen kann, anderseits aber einen Abstand der gewölbten Linsenabschnitte zur Anzeigefläche nicht unnötig stark vergrößert. Dann kann die Baugruppe, sofern dies erforderlich sein sollte, nach wie vor derart an der Anzeigefläche angebracht werden, dass die gewölbten Linsenabschnitte (also die erste Oberfläche der Lentikularlinsenschicht) der Anzeigefläche gegenüberliegt. Dies ermöglicht den Einsatz der Lentikularlinsen-Baugruppe insbesondere bei Anzeigeflächen mit sehr hoher Pixeldichte.

Eine weitere Ausführungsform sieht vor, dass die Deckschicht eine geringere Steifigkeit als die Trägerschicht und/oder die Lentikularlinsenschicht besitzt. Auch hierdurch wird ermöglicht, dass die Deckschicht vergleichsweise dünn ausgebildet werden kann und dass eine stabilisierende oder auch glättende Wirkung z.B. maßgeblich auf die Trägerschicht und/oder Lentikularlinsenschicht zurückzuführen bzw. durch diese bereitgestellt werden kann.

Gemäß einer weiteren Ausführungsform weist die Deckschicht eine Dicke von ca. 0,1 mm bis ca. 0,3 mm auf. Alternativ oder zusätzlich kann die Trägerschicht eine Dicke von ca. 0,5 mm bis ca. 4 mm aufweisen. Es hat sich gezeigt, dass sich mit derartigen Größenverhältnissen die hierin geschilderten Vorteile und Eigenschaften der Deckschicht und Trägerschicht und insbesondere deren jeweils zugeordnete Funktionen zuverlässig erreichen lassen, ohne aber z.B. die Kosten unnötig zu erhöhen oder die optischen Eigenschaften der Baugruppe zu beeinträchtigen. Beispielsweise kann eine entsprechend ausgebildete Trägerschicht zuverlässig als scheibenförmiges Glättungs-Element der vorstehend erwähnten Art verwendet werden, kann diese Funktionen aber auch noch zumindest im gewissen Umfang von der Deckschicht bereitgestellt werden (insbesondere aufgrund einer mittelbaren Stützung durch die entsprechende Trägerschicht), wobei die Deckschicht dann aber einen geringen Abstand der gewölbten Linsenabschnitte zur Anzeigefläche ermöglicht.

Ist die Deckschicht als eine entfernbare Schicht und insbesondere als eine Deckschicht-Folie ausgebildet, kann deren Dicke auch unterhalb der vorstehenden Werte liegen und zum Beispiel eine Dicke von weniger als 0,1 mm aufweisen.

Wie erwähnt, sieht eine bevorzugte Variante vor, dass die Deckschicht und/oder die Trägerschicht eben ausgebildet sind. Dies erleichtert z.B. eine Reinigung durch Abwischen (wenn die entsprechende Schicht eine außenliegende Schicht der angebrachten Baugruppe bildet). Andererseits wird hierdurch das Anbringen an einer ebenen Anzeigefläche erleichtert (wenn die entsprechende Schicht eine innenliegende bzw. an der Anzeigefläche angebrachte Schicht der Baugruppe bildet).

Eine Weiterbildung sieht vor, dass die Lentikularlinsenschicht mit wenigstens einer von Deckschicht und Trägerschicht stoffschlüssig verbunden ist. Der Stoffschluss kann vollflächig erfolgen oder sich zumindest bereichsweise mit der Anzeigefläche (z.B. aus Sicht des Betrachters) überlappen. Alternativ oder zusätzlich kann der Stoffschluss in einem Randbereich ausgebildet sein, der z.B. außerhalb eines von dem Betrachter erkennbaren Bereichs der Anzeigefläche liegt und/oder allgemein außerhalb eines Sichtfelds des Betrachters. Mittels der stoffschlüssigen Verbindung kann eine zuverlässige und feste Verbindung der Schichten innerhalb der Baugruppe erreicht werden, die zudem einfach gefertigt werden kann.

Gemäß einem weiteren Aspekt ist ein Raum zwischen der Deckschicht und der Lentikularlinsenschicht zumindest bereichsweise unausgefüllt. Insbesondere kann dies für einen sich mit der Anzeigefläche überlappenden Bereich der (angebrachten) Baugruppe gelten und/oder für einen Bereich, der in einem Sichtfeld des Betrachters liegt. Insbesondere kann es sich um einen zentralen Bereich handeln. Der Bereich kann mehr als 50 % und z.B. wenigstens 80 % der Fläche der Baugruppe und/oder der genannten Schichten einnehmen. Die Deckschicht ist in diesem Fall bevorzugt formsteif und/oder als eine Scheibe ausgebildet.

Unter der Formulierung "unausgefüllt" kann verstanden werden, dass kein festes oder flüssiges Material (oder allgemein keine Partikelmasse) zwischen den Schichten vorhanden ist, also zum Beispiel keine Klebschicht. Andererseits kann aber ein Gas oder ein Gasgemisch (insbesondere Luft) in dem Zwischenraum vorhanden sein. Auch das Herstellen eines Vakuums zwischen diesen Schichten ist aber möglich. Wie erwähnt, kann auf diese Weise ein bevorzugtes Brechungsverhalten der Lentikularlinsenschicht aufgrund der Differenz von dem Brechungsindex zum dann typischerweise niedrigeren Brechungsindex des unausgefüllten Raumes erzielt werden.

Insbesondere kann in diesem Zusammenhang vorgesehen sein, dass die Deckschicht nicht an den gewölbten Linsenabschnitten anliegt bzw. diese kontaktiert. Stattdessen kann ein Kontakt zur Lentikularlinsenschicht seitens der Deckschicht nur in einem Randbereich der Baugruppe vorliegen. Dieser Randbereich liegt in einem angebrachten Zustand der Baugruppe bevorzugt außerhalb eines für den Betrachter sichtbaren Bereichs der Anzeigefläche und/oder wird durch einen Verkleidungsrahmen o. ä. verdeckt.

Vorzugsweise erfolgt die Verbindung von Deckschicht und Lentikularlinsenschicht hermetisch, z.B. durch eine hermetische umlaufende Randverklebung dieser Schichten miteinander.

Ein alternativer Aspekt sieht vor, dass der Raum zwischen der Deckschicht und der Linsenschicht zumindest bereichsweise mit einem (dann bevorzugt flüssigen, festen und/oder fest erstarten) Material gefüllt ist (hierin auch als Füllmaterial bezeichnet). Dabei liegt der Brechungsindex dieses Materials bevorzugt unterhalb eines Brechungsindex der Linsenschicht (oder genauer gesagt des Materials der Linsenschicht). Bei dem Material im Zwischenraum kann es sich z.B. um ein Klebematerial handeln, z.B. ein Silikonmaterial oder ein anderweitiges Polymermaterial. Hierdurch wird eine zuverlässige Verbindung der Schichten und insbesondere eine etwaige vollflächige oder zumindest großflächige Verklebung dieser Schichten an- bzw. miteinander ermöglicht.

Eine entsprechende Verklebung ermöglicht eine sichere Verbindung der Schichten miteinander. Da Materialien und insbesondere Klebstoffe mit ausreichend niedrigen Brechungsindex jedoch vergleichsweise teuer sind, kann es vorteilhaft sein, alternativ auf die vorstehend diskutierte Variante eines unausgefüllten (z.B. lediglich mit einem Gas gefüllten) Zwischenraums mit etwaiger Randverklebung zurückzugreifen.

Der Zwischenraum zwischen Linsen- und Deckschicht ist zumindest bereichsweise mit einem Material, dem Füllmaterial, mit Adhäsionswirkung ausgefüllt, an dem die Deckschicht (vorzugsweise manuell entfernbar) anhaftet. Die Adhäsionswirkung kann auch genutzt werden, um das Material in direkten Kontakt mit der Anzeigeflächen zu bringen und ein Anhaften der Baugruppe an der Anzeigefläche herzustellen. Für ein solches Material kommt zum Beispiel ein Silikonmaterial in Betracht. Das Material stellt bevorzugt auch sämtliche der hierin geschilderten Brechungseffekte eines entsprechenden Füllmaterials bereit. Die Deckschicht ist bei dieser Variante bevorzugt als eine Deckschicht-Folie ausgebildet.

Trotz bevorzugt vorgesehener Adhäsionskraft des Füllmaterials kann auch zusätzlich oder alternativ eine Klebeschicht zwischen der Anzeigefläche und der Baugruppe eingebracht werden. Dies kann bei ausreichender Adhäsionskraft jedoch nicht erforderlich sein und aus Kostengründen bevorzugt nicht vorgesehen werden.

Vorzugsweise weist das Material in dem Zwischenraum (bei jeglichen der hierin genannten mit Varianten mit ausgefülltem Zwischenraum) einen Brechungsindex von nicht mehr als 1,3 auf. Die Linsenschicht kann hingegen allgemein einen Brechungsindex von z.B. einschließlich 1,4 bis einschließlich 1,8 oder bis zu einschließlich 2,0 aufweisen. Insbesondere kann die Linsenschicht aus einem Acrylat oder einem anderen transparenten Kunststoff gefertigt sein.

Gemäß einem vorstehend bereits angedeuteten Aspekt sieht eine weitere Ausführungsform vor, dass die Deckschicht (die vorzugsweise eine Folie ist, zum Beispiel aus einem Glas- oder Kunststoffmaterial) vor einem Anbringen der Baugruppe an der Anzeigefläche (von der Baugruppe) entfernbar ist, beispielsweise durch Abziehen der Deckschicht von der Baugruppe und insbesondere von einem (Füll-) Material zwischen Lentikularlinsenschicht und Deckschicht. Dieses Material kann also selektiv freigelegt werden, wobei die Baugruppe vorzugsweise derart relativ zur Anzeigeflächen orientiert wird, dass das Material bzw. die Seite, von der die Deckschicht entfernt wurde, der Anzeigeflächen zugewandt ist.

Vorzugsweise ist der Raum zwischen der Deckschicht und der Lentikularlinsenschicht zumindest bereichsweise mit einem Material gefüllt, dass ein Anhaften der Baugruppe an der Anzeigefläche ermöglicht. Wie geschildert, kann dieses Material zum Beispiel eine Adhäsionswirkung bereitstellen. Die Oberfläche dieses Materials ist insbesondere nach Entfernen der Deckschicht vorzugsweise eben, um ein Anbringen an der Anzeigefläche zu ermöglichen. Durch die Trägerschicht kann während der Montage eine die Baugruppe stabilisierende und/oder versteifende Wirkung ausgeübt werden, sodass das Material spätestens im Rahmen eines Andrückens an die Anzeigefläche geglättet werden kann.

Darauf hinzuweisen ist, dass das Material im Zwischenraum vorzugsweise aber nicht lediglich die Adhäsionswirkung, sondern auch die hierin erwähnte Brechungsfunktion bereitstellt, also auch eine gezielte optische Wirkung besitzt.

Allgemein kann die adhäsive Wirkung dadurch unterstützt werden, dass das Anbringen der Baugruppe an der Anzeigefläche im Vakuum erfolgt. Auf diese Weise kann verbleibende Rest Luft zwischen der Baugruppe und der Anzeigeflächen zuverlässig entfernt werden.

Um ein Entfernen der Deckschicht bzw. Deckschicht-Folie von diesen Material zu gewährleisten, kann ein Trennmittel (zum Beispiel eine nicht haftende Trennflüssigkeit oder ein Trennfilm) zwischen der Deckschicht und dem Material aufgebracht werden.

Ein allgemeiner Vorteil der Variante mit entfernbarer Deckschicht ist, neben einem bevorzugten Weglassen zusätzlicher Klebschichten beim Anbringen der Baugruppe an der Anzeigefläche, dass die Lenitikularlinsenschicht aufgrund der entfernten Deckschicht noch näher an der Anzeigefläche positioniert werden kann.

Außerdem ist bei dieser Variante ein Entfernen der Baugruppe von der Anzeigefläche (und gegebenenfalls auch erneutes Anbringen daran) einfacher möglich, als wenn gesonderte Klebschichten verwendet werden würden. Eine solche Entfernbarkeit ist zu Wartungszwecken oder zum Ausbessern von Produktionsfehlern vorteilhaft.

Wie erwähnt, kann die Deckschicht in einem Abstand (von z.B. nicht mehr als 1 mm oder auch nicht mehr als 0,5 mm) zu den Linsenabschnitten angeordnet sein. Anders ausgedrückt kann die Deckschicht die Linsenabschnitte vorzugsweise nicht kontaktieren und/oder nicht daran anliegen. Wie geschildert, kann hierdurch gewährleistet werden, dass das Brechungsverhalten der Baugruppe und insbesondere der Linsenschicht maßgeblich durch den Materialübergang vom bzw. im Zwischenraum bestimmt wird. Die Deckschicht oder auch eine außenseitig daran anliegende Zusatzklebschicht zum Anbringen der Baugruppe an der Anzeigefläche kann auf die optische Filterwirkung dann hingegen nur einen begrenzten Einfluss besitzen.

Ebenfalls erwähnt wurde auch die Ausführungsform, wonach die Lentikularlinsen-Baugruppe wahlweise derart an der Anzeigefläche anbringbar ist, dass entweder die Deckschicht (oder eine Seite, von der diese entfernt wurde) oder die Trägerschicht der Anzeigefläche gegenüberliegt und insbesondere vollflächig mit dieser verklebt wird.

Insbesondere kann vorgesehen sein, dass dann, wenn eine Pixeldichte der Anzeigefläche einen vorbestimmten Schwellenwert (z.B. 100 ppi) überschreitet, die Deckschicht (oder eine Seite, von der diese entfernt wurde) der Anzeigefläche gegenüberliegt und/oder mit dieser verklebt wird oder an dieser anhaftet. Dann kann nämlich der Abstand zwischen Anzeigefläche und gewölbten Linsenabschnitten aufgrund der typischerweise dünn ausgebildeten oder sogar entfernten Deckschicht und/oder allgemein der Nähe der Deckschicht zu den gewölbten Linsenabschnitten besonders gering ausfallen. Hingegen kann es vorteilhaft sein, bei unebenen Anzeigeflächen oder allgemein zum Erzielen eines besonders zuverlässigen Glättungseffekts die Trägerschicht gegenüberliegend zur Anzeigefläche anzuordnen und/oder direkt daran anzubringen.

Die Erfindung betrifft auch ein Verfahren zum Herstellen einer Lentikularlinsen-Baugruppe nach einem der vorangehenden Aspekte.

Dieses kann umfassen, dass eine Lentikularlinsenschicht, Deckschicht und Trägerschicht in der vorstehend genannten Schichtfolge miteinander verbunden werden. Insbesondere kann dies jegliche hierin geschilderten Verbindungsmechanismen (z.B. eine vollflächige oder zumindest bereichsweise Verklebung oder aber eine Randverklebung oder mittelbare Verbindung über umlaufende Rahmen) umfassen. Beispielsweise kann vorgesehen sein, eine Deckschicht gemäß jeglicher hierin geschilderten Variante einer ersten Oberfläche einer Lentikularlinsenschicht (ebenfalls gemäß jeglicher hierin geschilderten Variante) gegenüberliegend anzuordnen und eine Trägerschicht (die ebenfalls gemäß jeglicher hierin geschilderten Variante ausgebildet sein kann) einer zweiten Oberfläche der Linsenschicht gegenüberliegend anzuordnen. Weiter kann im Rahmen der Herstellung das Herstellen einer Verbindung von zumindest Deckschicht und Lentikularlinsenschicht sowie Lentikularlinsenschicht und Trägerschicht vorgesehen sein. Allgemein können also zumindest die Deckschicht und die Trägerschicht nicht direkt miteinander verbunden werden, sondern z.B. über die Lentikularlinsenschicht lediglich mittelbar miteinander verbunden sein. Ferner kann das Verfahren das Aufbringen eines Trennmittels zwischen einem Material (das sich bevorzugt im Zwischenraum zwischen Lentikularlinsenschicht und Deckschicht befindet) und der Deckschicht umfassen, insbesondere wenn die Deckschicht entfernbar sein soll.

Allgemein wird bevorzugt, dass der Schritt des Herstellens der Lentikularlinsen-Baugruppe einem tatsächlichen Anbringen an einer Anzeigefläche vorgelagert ist und/oder innerhalb einer räumlich getrennten Fertigungslinie stattfindet.

Entsprechend kann gemäß einer Weiterbildung vorgesehen sein, dass das Verfahren auch ein Anbringen der hergestellten Lentikularlinsen-Baugruppen an eine Anzeigefläche umfasst. Das Anbringen kann ein vollflächiges Verkleben der vorgefertigten bzw. fertiggestellten Baugruppe und insbesondere entweder von deren Deckschicht oder aber Trägerschicht an der Anzeigefläche umfassen. Alternativ oder zusätzlich kann es das Entfernen (insbesondere manuelle Abziehen) der Deckschicht und insbesondere einer etwaigen Deckschicht-Folie von der Baugruppe umfassen, um die Baugruppe und insbesondere deren von der Deckschicht freigelegte Seite an der Anzeigefläche anzubringen und insbesondere daran anzudrücken.

Insbesondere kann vorgesehen sein, dass dann, wenn die Anzeigefläche eine Pixeldichte von mehr als 100 ppi aufweist, die Lentikularlinsen-Baugruppe derart an der Anzeigefläche angebracht wird, dass die Deckschicht (oder aber eine Seite, von der die Deckschicht vorher entfernt wurde) der Anzeigefläche gegenüberliegt. Dann wird der bereits diskutierte möglichst geringe Abstand zwischen den gewölbten Linsenabschnitten (oder auch der Linsenoberfläche) und der Anzeigefläche erzielt. Liegt die Auflösung hingegen unterhalb dieses Schwellenwerts, oder soll ein vergleichsweise großer Betrachtungsabstand (von bspw. mehr als 1 Meter) erreicht werden, kann die Trägerschicht an der Anzeigefläche angebracht bzw. dieser gegenüberliegend angeordnet werden.

Eine weitere Ausführungsform sieht vor, dass eine Mehrzahl von baugleichen Lentikularlinsen-Baugruppen gemäß jeglicher hierin geschilderten Variante hergestellt wird und dass wenigstens eine erste und eine zweite Anzeigefläche (die dann bevorzugt unterschiedlich voneinander sind und z.B. eine unterschiedliche Pixeldichte aufweisen) bereitgestellt werden. Dabei kann vorgesehen sein, dass eine der Lentikularlinsen-Baugruppen an der ersten Anzeigefläche derart angebracht wird, dass die Deckschicht (oder eine Seite, von der die Deckschicht entfernt wurde) der Anzeigefläche gegenüberliegt, und dass eine andere der Lentikularlinsen-Baugruppen an der zweiten Anzeigefläche derart angebracht wird, dass die Trägerschicht der Anzeigefläche gegenüberliegt. In diesem Beispiel kann die erste Anzeigefläche eine höhere Pixeldichte als die zweite Anzeigefläche aufweisen.

Diese Verfahrens-Weiterbildung verdeutlicht noch einmal, dass mit der vorliegenden Lentikularlinsen-Baugruppe wahlweise optische Eigenschaften bereitstellbar sind, je nachdem, welche von Deckschicht (bzw. Seite, von der diese entfernt wurde) und Trägerschicht gegenüberliegend zur Anzeigefläche angeordnet oder aber auch direkt daran angebracht wird. Dies erhöht die Einsatzflexibilität der Lentikularlinsen-Baugruppe, die je nach den gewünschten Eigenschaften mit einer unterschiedlichen Orientierung relativ zur Anzeigefläche angeordnet bzw. daran angebracht werden kann.

Allgemein kann das Verfahren sämtliche weiteren Merkmale, Aspekte und Varianten umfassen, um jegliche hierin geschilderten Zustände, Vorteile und Wechselwirkungen bereitzustellen. Insbesondere kann das Verfahren sämtliche Maßnahmen umfassen, um eine Lentikularlinsen-Baugruppe gemäß jeglichem hierin geschilderten Aspekt herzustellen und/oder um eine Lentikularlinsen-Baugruppe jeglicher hierin geschilderten Weise an einer Anzeigefläche anzubringen. Insbesondere können sämtliche Ausführungen zu und Weiterbildungen von den Merkmalen der Lentikularlinsen-Baugruppe auf entsprechende Merkmale des Verfahrens ebenso zutreffen bzw. bei diesen vorgesehen sein.

Die Erfindung wird im Folgenden anhand der beigefügten schematischen Figuren beispielhaft erläutert. Figurenübergreifend können gleichartige oder gleichwirkende Merkmale mit den gleichen Bezugszeichen versehen sein.
- Fig. 1: zeigt eine Seitenansicht einer Lentikularlinsen-Baugruppe gemäß einem Ausführungsbeispiel der Erfindung.
- Fig. 2: zeigt die Lentikularlinsen-Baugruppe aus Fig. 1 in einem an einer Anzeigefläche angebrachten Zustand.
- Fig. 3: zeigt ein Ablaufschema eines erfindungsgemäßen Verfahrens zum Herstellen der Lentikularlinsen-Baugruppe aus z.B. Fig. 1.
- Fig. 4: zeigt ein Ablaufschema eines Verfahrens gemäß einem weiteren erfindungsgemäßen Aspekt.

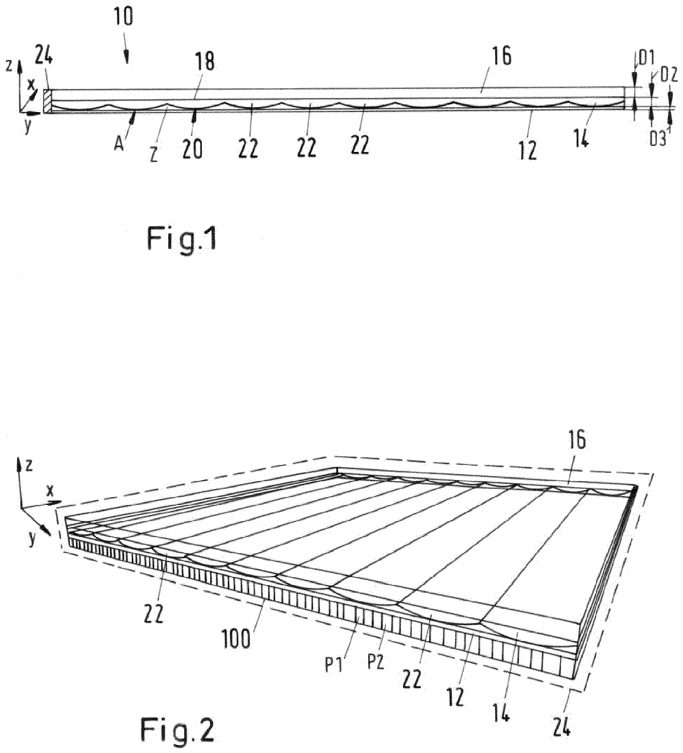

In Fig. 1 ist eine Lentikularlinsen-Baugruppe 10 in einer Seitenansicht gezeigt. Die Lentikularlinsen-Baugruppe 10 (im Folgenden auch lediglich als Baugruppe bezeichnet) erstreckt sich in die Blattebene hinein, wie sich auch aus der perspektivischen Ansicht von Fig. 2 verdeutlicht. Die gewählten Darstellungen sind lediglich schematisch und beispielhaft. Insbesondere könnten die einzelnen nachstehend erläuterten Linsenabschnitte 22 schräg innerhalb der X-Y Ebene verlaufen, was in der Fachsprache auch als "slanted" bezeichnet wird.

Man erkennt, dass die Baugruppe 10 schichtartig aufgebaut ist. Dabei sind entlang einer Höhenachse z, entlang derer auch hierin diskutierte Schichtdicken gemessen werden können, Schichten gemäß folgender Abfolge vorgesehen: Die unterste Schicht in Fig. 1 ist eine Deckschicht 12, die darauffolgende Schicht ist eine Lentikularlinsenschicht 14 und die in Fig. 1 oberste Schicht ist eine Trägerschicht 16.

Die Lentikularlinsenschicht 14 ist somit entlang der Höhenachse z betrachtet zwischen den Schichten 12, 16 angeordnet. Die Baugruppe 10 kann deshalb auch als Sandwichfilter bezeichnet werden, wobei die Filtereigenschaft in an sich bekannter Weise durch die Lentikularlinsenschicht 14 bereitgestellt wird. Bildlich gesprochen filtert diese die für ein jedes Auge des Betrachters sichtbaren Inhalte, die von einer nachstehend erläuterten Anzeigefläche 100 angezeigt werden (siehe Fig. 2).

Sämtliche der Schichten 12, 14, 16 erstrecken sich in einer horizontalen Raumebene (z.B. in der x-y-Ebene aus Fig. 1). Sie stehen somit ebenfalls senkrecht auf der Blattebene.

Gezeigt sind auch die unterschiedlichen Schichtdicken: Die Trägerschicht 16 weist eine Dicke D1, die Lentikularlinsenschicht 14 (im Folgenden auch lediglich als Linsenschicht bezeichnet) weist eine Dicke D2 und die Trägerschicht 12 weist eine Dicke D3 auf. Man erkennt, dass die Dicke D3 der Deckschicht deutlich geringer als diejenige der Träger- und Linsenschicht 16, 14 ist. Beispielsweise kann die Dicke D3 nur die Hälfte der Dicken D1, D2 von zumindest einer der anderen Schichten 14, 16 oder aber auch lediglich bis zu einem Viertel hiervon betragen. Die Trägerschicht 16, vorzugsweise aber auch die Linsenschicht 14, weist auch eine höhere Steifigkeit als die Deckschicht 12 auf. Zusätzlich oder alternativ zu der Wahl einer vergleichsweise großen Dicke D3 kann diese höhere Steifigkeit der Trägerschicht 16 auch durch eine geeignete Materialwahl erzielt werden. Allgemein ist es aber auch möglich, die Linsenschicht 14 mit einer geringen Dicke D2 auszubilden, die beispielsweise gleich oder geringer als die Dicke D3, vorzugsweise aber nicht als die Dicke D1 ist. Insbesondere kann die Linsenschicht 14 eine Dicke D2 von 0,1 mm oder weniger aufweisen.

Die Trägerschicht 16 und die Deckschicht 12 sind beide jeweils eben ausgebildet und allgemein glatt. Dabei wird jeweils auf die in der x-y-Raumebene verlaufenden Oberflächen dieser Schichten 12, 16 abgestellt. Sie bilden jeweils Außenseiten der Baugruppe 10.

Die Linsenschicht 14 weist hingegen lediglich eine glatte und ebene Oberfläche 18 auf. Dabei handelt es sich um die hierin als zweite Oberfläche 18 bezeichnete Oberfläche, die in Fig. 1 oben liegt bzw. der Trägerschicht 16 zugewandt ist und an dieser anliegt. Genauer gesagt ist die Trägerschicht 16 vorzugsweise vollflächig mit dieser zweiten Oberfläche 18 der Linsenschicht 14 verklebt. Letzteres wird durch ein entsprechendes glattes und ebenes Ausbilden der zweiten Oberfläche 18 ermöglicht.

An der gegenüberliegenden Oberfläche 20 der Linsenschicht 14, die hierin als erste Oberfläche 20 bezeichnet wird, ist die Linsenschicht 14 abschnittsweise gewölbt ausgebildet. Genauer gesagt weist sie eine Mehrzahl gewölbter Linsenabschnitte 22 auf, die in Fig. 1 entlang der x-Achse verlaufen, also senkrecht auf der Blattebene stehen (siehe auch perspektivische Darstellung von Fig. 2).

Entlang der anderen Achse der horizontalen Erstreckung (also entlang der y-Achse) sind die gewölbten Linsenabschnitte 22 aneinandergereiht bzw. gehen ineinander über. Aus Gründen der Übersichtlichkeit sind dabei nicht sämtliche Linsenabschnitte 22 in den Figuren mit einem eigenen Bezugszeichen versehen.

Die Linsenabschnitte 22 sind konvex gewölbt, z.B. in Bezug auf die zweite Oberfläche 18. Anders ausgedrückt erstrecken sie sich weg von dieser Oberfläche 18 nach außen beziehungsweise bilden (zum Beispiel gegenüber/aus der Schichtebene) hervorstehende, gewölbte Abschnitte an der ersten Oberfläche 20. Weiter erstrecken sich die Linsenabschnitte 22 abschnittsweise in Richtung der Deckschicht 12.

Die Linsenabschnitte 22 bilden folglich ein an sich bekanntes Linsen- bzw. Linienraster aus. Derartige Lentikularlinsen oder auch Lentikularfilter sind am Markt erhältlich.

Die Deckschicht 12 liegt der mehrfach gewölbten ersten Oberfläche 18 der Linsenschicht 14 gegenüber. Nicht gesondert erkennbar ist, dass die Deckschicht 12 nicht an der Linsenschicht 14 oder auch zumindest nicht an gewölbten Linsenabschnitten 22 anliegt. Dies ist aber beispielhaft in einem Fall als Abstand A schematisch angedeutet. Dieser Abstand A kann geringer als jegliche der Schichtdicken D1-D3 oder maximal gleich der Dicke D3 sein.

Auf diese Wiese wird die Baugröße der Baugruppe 10 reduziert und wird nach wie vor ermöglicht, dass die Linsenschicht 14 und insbesondere deren erste Oberfläche 20 (sofern erforderlich) besonders nahe an einer Anzeigefläche 100 angeordnet werden kann.

Weiter ermöglicht dieser Abstand A, dass die optischen Eigenschaften bzw. das Brechungsverhalten der Baugruppe 10 zuverlässig und definiert einstellbar ist. Dieses hängt nämlich maßgeblich von dem Materialübergang zwischen dem Zwischenraum Z zwischen der Deckschicht 12 und der Linsenschicht 14 sowie der Linsenschicht 14 selbst ab. Wie in Fig. 1 gezeigt, verläuft dieser Zwischenraum Z zwischen der ebenen Innenseite der Deckschicht 12 und der ersten Oberfläche 20. Der Zwischenraum Z erstreckt sich also insbesondere in den Freiraum zwischen zwei benachbarten Linsenabschnitten 22 hinein, also bildlich gesprochen in die Vertiefungen bzw. Täler, die von zwei benachbarten Linsenabschnitten 22 begrenzt werden.

Gemäß einer Variante ist es möglich, dass in dem Zwischenraum Z ein Material eingebracht ist. Dieses weist dann vorzugsweise einen geringeren Brechungsindex als das Material der Linsenschicht 14 auf, also z.B. ein Brechungsindex von weniger als 1,4. Bei dem Material kann es sich um ein Klebematerial handeln, mit dem die Deckschicht 12 mit der Linsenschicht 14 verbunden wird.

Alternativ oder zusätzlich kann auch vorgesehen sein, die Deckschicht 12 und die Linsenschicht 14 (bevorzugt aber auch die Trägerschicht 16) über eine Randverklebung 24 miteinander zu verbinden. Diese verläuft ebenfalls vorzugsweise in der horizontalen Ebene und weist eine Dicke auf, die zumindest den Dicken der zu verbindenden Schichten 12-16 (also wenigstens D2 und D3, optional auch D1) entspricht. Weiter umschließt und/oder umläuft die Randverklebung 24 dabei die Baugruppe 10 zumindest abschnittsweise. Insbesondere kann sie die Baugruppe 10 und deren Schichten 12, 14, 16 rahmenartig um- und/oder einschließen.

Ein schematischer Verlauf einer solchen rahmenartigen Randverklebung 24 ist in Fig. 2 gestrichelt eingetragen. Gezeigt ist, dass sich die Randverklebung 24 dann ebenfalls in der zweidimensionalen Ebene der Baugruppe 10 bzw. von deren einzelnen Schichten 12, 14, 16 erstrecken kann. Bevorzugt ermöglicht die Randverklebung 24 eine Abdichtung des Zwischenraums Z gegenüber der Umgebung und insbesondere eine hermetische Abdichtung.

Der Zwischenraum Z kann allgemein auch unausgefüllt sein (d.h. mit keinem festen oder flüssigem Material, optional jedoch mit einem Gas gefüllt sein). Insbesondere im Rahmen der hermetischen Randverklebung kann dort auch ein Vakuum vorherrschen, alternativ aber Luft oder ein anderes Gasgemisch vorgesehen sein.

Wie auch im allgemeinen Beschreibungsteil diskutiert, können die Schichten 12 und 16 aus einem Glasmaterial hergestellt sein und kann die Linsenschicht 14 ein Acrylat umfassen.

Vorstehend wurde also gezeigt, dass die Schichten 12, 14 und 16 miteinander verbunden sind. Insbesondere sind sie miteinander verklebt, z.B. direkt aneinander oder aber mittels der Randverklebung 24. Die Verbindung erfolgt dabei derart, dass die Baugruppe 10 als ein gesondert handhabbares Modul vorliegt und z.B. als Endprodukt einer Fertigungslinie entnommen, verpackt und gegebenenfalls verschickt werden kann. Unter der festen Verbindung kann dabei verstanden werden, dass die Schichten 12, 14,16 nicht zerstörungsfrei zum Beispiel per Muskelkraft voneinander trennbar sind. Insbesondere können Kräfte von wenigstens 100 Newton erforderlich sein, um die Schichten 12-16 voneinander zu trennen, dann aber vorzugsweise ebenfalls nicht zerstörungsfrei.

Die Baugruppe 10 liegt also als ein einzelnes Modul bzw. eine fest verbundene Einheit vor, auch wenn sie noch nicht an einer Anzeigefläche 100 angebracht ist. Stattdessen kann sie vorgefertigt und gegebenenfalls eingelagert oder verschickt werden und dann in der nachstehend geschilderten Weise an eine Anzeigefläche 100 angebracht werden. Letzteres kann z.B. in der Fertigungslinie einer Anzeigevorrichtung oder eines allgemein elektronischen Geräts erfolgen, welches die entsprechende Anzeigefläche 100 umfasst.

Weiter ist hervorzuheben, dass die Baugruppe 10, wie nachstehend auch anhand von Fig. 2 erläutert, mittels verschiedener Orientierungen auf eine Anzeigefläche 100 aufbringbar ist. Prinzipiell kann dies derart erfolgen, dass die Deckschicht 12 der Anzeigefläche 100 direkt gegenüberliegt oder aber die Trägerschicht 16. Vorzugsweise werden diese Schichten 12, 16 dann mit der Anzeigefläche 100 verklebt (insbesondere vollflächig verklebt).

Liegt die Trägerschicht 16 der Anzeigefläche 100 gegenüber, kann diese aufgrund ihrer erhöhten Steifigkeit besonders effektiv als ein vorstehend diskutiertes Glättungs-Element wirken und z.B. Unebenheiten der Anzeigefläche 100 ausgleichen. Die Deckschicht 12 kann einen solchen Glättungseffekt bei Anbringen an der Anzeigeflächen 100 ebenfalls bereitstellen (zum Beispiel mittelbar gestützt und/oder versteift durch die Trägerschicht 16).

Wenn die Trägerschicht 16 der Anzeigefläche 100 gegenüberliegt und Vorzugsweise mit dieser verklebt ist, weist die Deckschicht 12 nach außen. Dabei bildet die Deckschicht 12 eine glatte äußere Oberfläche der Baugruppe 10. Diese kann auch eine äußerste Oberfläche der Anzeigevorrichtung bilden bzw. die Anzeigefläche 100 nach außen (oder auch von außen) abgrenzen. In diesem Fall ist die Deckschicht 12 dahingehend vorteilhaft, als dass sie die Linsenschicht 14 vor Beschädigung und Verschmutzung schützt. Gleichzeitig ermöglicht die bevorzugte ebene Ausbildung der Deckschicht 12 eine einfache Reinigung und insbesondere ein einfaches Abwischen der Baugruppe 10 bzw. Anzeigefläche 100.

In Fig. 2 ist eine alternative Konfiguration gezeigt, bei der die Baugruppe 10 derart an einer Anzeigefläche 100 angebracht ist, dass die Deckschicht 12 der Anzeigefläche 100 gegenüberliegt und insbesondere an dieser anliegt. Aufgrund der geringen Schichtdicke D3 der Deckschicht 12 bedeutet dies, dass die gewölbten Linsenabschnitte 22 bzw. die erste Oberfläche 20 der Linsenschicht 14 in einem geringeren Abstand zu der Anzeigefläche 100 positioniert ist, als wenn die Trägerschicht 16 an der Anzeigefläche 100 angebracht werden würde (also als wenn die Baugruppe 10 mit entgegengesetzter Orientierung an der Anzeigefläche 100 angebracht wäre).

Wie einleitend geschildert, ist dieser geringer Abstand insbesondere bei einer hohen Pixeldichte der Anzeigefläche 100 vorteilhaft, um den gewünschten Lentikulareffekt zu erzielen (d.h. die räumliche Wahrnehmbarkeit der angezeigten Inhalte bereitzustellen).

Im Fall von Fig. 2, bei der die Deckschicht 12 an der Anzeigefläche 100 angebracht ist, weist die Trägerschicht 16 nach außen. Dort bildet sie einen besonders zuverlässigen Schutz, insbesondere gegen mechanische Beschädigungen, da sie eine erhöhte Schichtdicke D1 sowie vorzugsweise auch eine erhöhte Steifigkeit aufweist.

Lediglich schematisch angedeutet in Fig. 2 ist, dass die Anzeigefläche 100, die beispielhaft ein LCD-Display ist, über mehrere einzelne Anzeigebereiche und genauer gesagt Anzeigeeinheiten P1, P2 verfügt. Diese sind in bekannter Weise als einzeln ansteuerbare Pixel (insbesondere LCD-Pixel) ausgebildet. Die Anzeigefläche 100 oder aber die Anzeigevorrichtung, in der diese verbaut wird, kann über die im Stand der Technik bekannten Energieversorgungen und/oder Ansteuereinheiten verfügen, um Inhalten vorzugeben, die mit den Anzeigeeinheiten P1, P2 angezeigt werden sollen. Die Inhalte werden als bzw. mittels von den Anzeigeeinheiten P1, P2 erzeugten Lichtwellen angezeigt. Das von einer jeden Einheit P1, P2 abgestrahlte Licht wird dann von der Linsenschicht 14 zum Erzielen des gewünschten Lentikulareffekts in an sich bekannter Weise gebrochen bzw. optisch gefiltert.

Es wurde also gezeigt, dass je nach den Eigenschaften der Anzeigefläche 100 oder aber auch den allgemein gewünschten Eigenschaften einer Vorrichtung, in der diese Anzeigefläche 100 verbaut ist, die Baugruppe 10 mit einer wahlweisen Orientierung der Schichten 12, 14, 16 zur Anzeigefläche 100 anbringbar ist. Entsprechend weist die Baugruppe 10 eine hohe Einsatzflexibilität auf und kann deshalb auch bei verschiedenen Anzeigeflächen 100 zum Einsatz kommen.

Weiter sind in einer Endmontagelinie, weniger komplexe Fertigungsstationen und Fertigungsschritte erforderlich, als wenn man die Schichten 12, 14, 16 einzeln an der Anzeigefläche 100 anbringen würde. Stattdessen ist es lediglich erforderlich, eine gewünschte Orientierung der Baugruppe 10 festzulegen und diese dann mit dieser Orientierung in einem einzigen Fertigungsschritt an der Anzeigefläche 100 anzubringen.

Es ist ferner darauf hinzuweisen, dass gemäß den im allgemeinen Beschreibungsteil erläuterten weiteren Ausführungsformen auch vorgesehen sein kann, dass die Deckschicht 12 von der Baugruppe 10 entfernbar ist, vorzugsweise manuell entfernbar und ferner bevorzugt manuell abziehbar. Dann ist die Deckschicht 12 bevorzugt als eine Folie ausgebildet und in dem Zwischenraum Z ist ein Material eingefüllt. Dieses Material kann eine Adhäsionswirkung bereitstellen, damit die Deckschicht 12 an der Baugruppe 10 anhaftet. Um ein zuverlässiges manuelles Entfernen zu gewährleisten, kann diese Wirkung durch Aufbringen eines Trennmittels zwischen Material und Folie bewusst herabgesetzt werden. Beim Abziehen der Deckschicht-Folie 12 kann dieses Trennmittel zumindest teilweise an der Folie verbleiben, sodass ein sicheres Anhaften dder Baugruppe 10 mit der dann freigelegten Seite bzw. dem freigelegten Material im Zwischenraum Z an der Anzeigeflächen 100 gewährleistet ist.

Es versteht sich, dass die Deckschicht-Folie 12 bevorzugt nur dann entfernt wird, wenn die dann freigelegte Seite bzw. das dortige Material an der Anzeigeflächen 100 angebracht werden soll. Die Deckschicht-Folie 12 verbleibt hingegen bevorzugt an der Baugruppe 10, wenn dies nicht der Fall ist bzw. wenn die Trägerschicht 16 mit der Anzeigeflächen 100 verklebt werden soll.

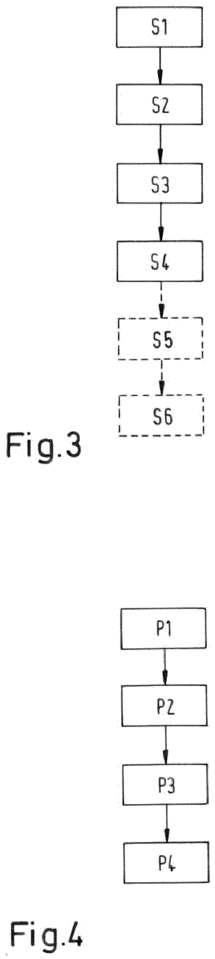

Im Folgenden werden in Fig. 3 und Fig. 4 beispielhafte Verfahrensabläufe gemäß Aspekten der Erfindung erläutert.

In Fig. 3 ist ein Verfahrensablauf zum Herstellen der Baugruppe 10 aus Fig. 1 gezeigt. In einem Schritt S1 werden die Schichten 12, 14, 16 in zunächst separater Form hergestellt und/oder bereitgestellt.

In einem Schritt S2 wird die Trägerschicht 16 an die zweite Oberfläche 18 der Linsenschicht 14 angebracht und vorzugsweise vollflächig mit dieser verklebt.

In einem Schritt S3, der prinzipiell auch vor dem Schritt S2 ablaufen könnte, wird die Deckschicht 12 mit der ersten Oberfläche 20 der Linsenschicht 14 über eine optionale Klebschicht im Zwischenraum Z aus Fig. 1 verbunden. Alternativ erfolgt eine Verbindung der Schichten 12, 14 (optional auch mit der Deckschicht 16) über die vorstehend diskutierte Randverklebung 24. Ferner alternativ erfolgt ein Verbinden der Deckschicht 12 (insbesondere einer Deckschicht-Folie) mit einem im Zwischenraum Z befindlichen Material per Adhäsion.

In einem Schritt S4 ist die Baugruppe 10 durch das feste und bevorzugt dauerhafte Verbinden der Schichten 12, 14, 16 in den vorangehenden Schritte S1-S3 fertiggestellt, d.h. vorgefertigt. Unter das feste und dauerhafte Verbinden fallen auch Varianten, bei denen die Deckschicht 12 manuell entfernbar ist, aber die Baugruppe 10 für sich genommen aus aneinander befestigten Schichten 12, 14, 16 besteht und als solche auch zum Beispiel transportierbar ist. Die Baugruppe 10 kann in diesem vorgefertigten Zustand z.B. zu einer Endfertigungslinie einer Anzeigevorrichtung und/oder Anzeigeflächen 100 weitertransportiert werden.

Ein alternativer Verfahrensablauf, der zusätzlich die in Figur 3 eingetragenen gestrichelten Schritte S5 und der S6 sowie alternative Vorgehensweisen in den Schritten S1-S4 umfasst, lautet wie folgt: Im Schritt S1 wird eine konkave Form und, genauer gesagt, ein Negativ der Linsenschicht 14 und insbesondere der ersten Oberfläche 20 (also der Linsenabschnitte 22) mit flüssigem Kunststoff gefüllt. Vorzugsweise wird ein flüssiges Polymer (z.B. Acryl) verwendet.

Im Schritt S2 wird die Trägerschicht 16 auf die Form aus Schritt S1 aufgelegt und ausgerichtet, wobei die Form noch das flüssige Polymer enthält. Die Seite der Trägerschicht 16, mit der diese auf die Form aufgelegt wird, weist vorzugsweise eine Vorbereitung oder Vorbehandlung zur Haftverbesserung an dem bzw. mit dem Polymer auf. Zum Beispiel kann sie einen sogenannten Primer aufweisen oder mit einem solchen behandelt sein.

Im Schritt S3 wird das flüssige Polymer gehärtet, z. B. durch Bestrahlen mit UV-Licht. Dadurch wird es fest mit Trägerschicht 16 verbunden.

In einem Schritt S4 wird (insbesondere nach Entfernen der Negativ-Form) Silikon von außen auf die erste Oberfläche 20 der Linsenschicht 14 aufgebracht. Die gewölbten Linsenabschnitte 22 und genauer gesagt die Freiräume hierzwischen werden folglich mit Silikon aufgefüllt.

In einem Schritt S5 wird die Deckschicht 12 auf die Linsenschicht 14 und das darauf aufgebrachte Silikon aufgesetzt und ausgerichtet.

In einem Schritt S6 wird das Silikon ausgehärtet und werden somit die Deckschicht 12 und die Linsenschicht 14 miteinander verklebt. Dies ist aber nicht zwingend. Stattdessen kann das Silikon nicht vollständig ausgehärtet werden und/oder kann ein Trennmittel zwischen Silikon und der Deckschicht 12 aufgebracht werden, damit die Deckschicht 12 in der hierin geschilderten Weise manuell entfernbar ist.

Ein möglicher Ablauf der Fertigung in einer solchen Endfertigungslinie ist in Fig. 4 gezeigt. In einem Schritt P1 wird die Baugruppe 10 als vorgefertigtes Modul bereitgestellt.

In einem Schritt P2 wird die Baugruppe 10 gemäß einer gewünschten Orientierung ausgerichtet. Dies erfolgt derart, dass entweder die Deckschicht 12 (oder eine Seite, von der die Deckschicht 12 als eine vorgelagerte Maßnahme entfernt wurde) oder aber die Trägerschicht 16 der Anzeigefläche 100 gegenüberliegt. Kriterien für die Wahl der Orientierung wurden vorstehend genannt (z.B. Pixeldichte der Anzeigefläche 100, erforderliche Glättungseffekte etc.).

In einem Schritt P3 wird die Baugruppe 10 dann mit der entsprechend festgelegten Orientierung mit der Anzeigefläche 100 verbunden und vorzugsweise vollflächig hiermit verklebt. Im Falle einer entfernten Deckschicht 12 kann das Verbinden per Adhäsion und vorzugsweise ohne zusätzliche Klebschicht erfolgen.

In einem Schritt P4 ist die entsprechend beschichtete Anzeigefläche 100 fertiggestellt und kann dann, sofern noch nicht geschehen, in einer Anzeigevorrichtung verbaut oder mit dieser verbunden werden. Die Anzeigevorrichtung kann z.B. die erforderliche Energieversorgung für die Anzeigefläche 100 und/oder die hierfür erforderlichen Ansteuereinheiten aufweisen (beispielsweise eine Computereinrichtung zum Ansteuern der Anzeigefläche 100 zwecks Darstellen gewünschter Inhalte).

## Patentansprüche

1. Vorgefertigte Lentikularlinsen-Baugruppe (10) zum Anbringen an einer Anzeigefläche (100), mit:
- einer Lentikularlinsenschicht (14), die eine erste Oberfläche (20) mit mehreren gewölbten Linsenabschnitten (22) und eine zweite Oberfläche (18) umfasst, die von der ersten Oberfläche (20) abgewandt ist;
- einer Deckschicht (12), die zumindest bereichsweise der ersten Oberfläche (20) der Lentikularlinsenschicht (14) gegenüberliegt;
- einem Füllmaterial zwischen der Lentikularlinsenschicht (14) und der Deckschicht (12);
- einer Trägerschicht (16), die zumindest bereichsweise der zweiten Oberfläche (18) der Lentikularlinsenschicht (14) gegenüberliegt;
wobei die Lentikularlinsenschicht (14), die Deckschicht (12) und die Trägerschicht (16) miteinander verbunden sind,
wobei das Füllmaterial ausgestaltet ist, bei Anbringung an der Anzeigefläche (100) und nach Entfernung der Deckschicht eine Adhäsionswirkung der Lentikularlinsen-Baugruppe (10) an der Anzeigefläche (100) zu erzeugen.

2. Lentikularlinsen-Baugruppe (10) nach Anspruch 1,
wobei die Deckschicht (12) dünner als die Trägerschicht (16) und/oder die Lentikularlinsenschicht (14) ist, und/oder
wobei die Deckschicht (12) eine geringere Steifigkeit als die Trägerschicht (16) und/oder die Lentikularlinsenschicht (14) besitzt.

3. Lentikularlinsen-Baugruppe (10) nach Anspruch 1 oder 2,
wobei die Deckschicht (12) eine Dicke von 0,1 bis 0,3 mm aufweist und/oder wobei die Trägerschicht (16) eine Dicke von 0,5 bis 4 mm aufweist.

4. Lentikularlinsen-Baugruppe (10) nach einem der vorangehenden Ansprüche,
wobei die Deckschicht (12) und/oder die Trägerschicht (16) eben ausgebildet ist.

5. Lentikularlinsen-Baugruppe (10) nach einem der vorangehenden Ansprüche,
wobei die Lentikularlinsenschicht (14) über das Füllmaterial mit der Deckschicht (12) stoffschlüssig verbunden ist.

6. Lentikularlinsen-Baugruppe (10) nach einem der vorangehenden Ansprüche,
wobei ein Raum (Z) zwischen der Deckschicht (12) und der Lentikularlinsenschicht (14) bereichsweise frei von festem und frei von flüssigem Material ist.

7. Lentikularlinsen-Baugruppe (10) nach einem Ansprüche 1 bis 5,
wobei ein Raum (Z) zwischen der Deckschicht (12) und der Lentikularlinsenschicht (14) zumindest bereichsweise mit dem Füllmaterial gefüllt ist, dessen Brechungsindex unterhalb eines Brechungsindex der Lentikularlinsenschicht (14) liegt.

8. Lentikularlinsen-Baugruppe (10) nach einem der vorangehenden Ansprüche,
wobei die Deckschicht (12) in einem Abstand (A) zu den Linsenabschnitten (22) angeordnet ist.

9. Verfahren zum Herstellen einer Lentikularlinsen-Baugruppe (10) nach einem der vorangehenden Ansprüche, wobei
- eine Lentikularlinsenschicht (14) bereitgestellt wird, die eine erste Oberfläche (20) mit mehreren gewölbten Linsenabschnitten (22) und eine zweite Oberfläche (18) umfasst, die von der ersten Oberfläche (20) abgewandt ist;
- eine Trägerschicht (16) vorgesehen wird, die zumindest bereichsweise einer zweiten Oberfläche (18) der Lentikularlinsenschicht (14) gegenüberliegt;
- ein Füllmaterial an der ersten Oberfläche (20) angeordnet wird;
- eine Deckschicht (12) zumindest bereichsweise der ersten Oberfläche (20) der Lentikularlinsenschicht (14) gegenüberliegend angeordnet wird, sodass das Füllmaterial zwischen der Lentikularlinsenschicht (14) und der Deckschicht (12) angeordnet ist;
wobei die Lentikularlinsenschicht (14), die Deckschicht (12) und die Trägerschicht (16) miteinander verbunden werden,
wobei das Füllmaterial ausgestaltet wird oder ist, bei Anbringung an der Anzeigefläche (100) und nach Entfernung der Deckschicht eine Adhäsionswirkung der Lentikularlinsen-Baugruppe (10) an der Anzeigefläche (100) zu erzeugen.

10. Verfahren nach Anspruch 9,
- Anbringen der hergestellten Lentikularlinsen-Baugruppe (10) an einer Anzeigefläche (100), wobei das Füllmaterial nach Entfernung der Deckschicht an der Anzeigefläche (100) angebracht wird und eine Adhäsionswirkung der Lentikularlinsen-Baugruppe (10) an der Anzeigefläche (100) erzeugt.

11. Verfahren nach Anspruch 9 oder 10,
wobei eine Mehrzahl von baugleichen Lentikularlinsen-Baugruppen (10) hergestellt und wenigstens eine erste und eine zweite Anzeigefläche (100) bereitgestellt werden;
wobei eine der Lentikularlinsen-Baugruppen (10) an der ersten Anzeigefläche (100) derart angebracht wird, dass eine Seite der Baugruppe (10), von der die Deckschicht (12) entfernt wurde, der Anzeigefläche (100) gegenüberliegt; und
wobei eine andere der Lentikularlinsen-Baugruppen (10) an der zweiten Anzeigefläche (100) derart angebracht wird, dass die Trägerschicht (16) der Anzeigefläche (100) gegenüberliegt.

## Claims

1. A prefabricated lenticular lens assembly (10) for attachment to a display area (100), having:
- a lenticular lens layer (14) comprising a first surface (20) having a plurality of curved lens portions (22) and a second surface (18) facing away from the first surface (20);
- a cover layer (12) which faces the first surface (20) of the lenticular lens layer (14) at least in some regions;
- a filler material between the lenticular lens layer (14) and the cover layer (12);
- a carrier layer (16) which faces a second surface (18) of the lenticular lens layer (14) at least in some regions;
wherein the lenticular lens layer (14), the cover layer (12) and the carrier layer (16) are connected to each other,
wherein, when attached to the display area (100) and after removal of the cover layer, the filler material is designed to provide an adhesive effect of the lenticular lens assembly (10) to the display area (100).

2. The lenticular lens assembly (10) according to claim 1,
wherein the cover layer (12) is thinner than the carrier layer (16) and/or the lenticular lens layer (14), and/or
wherein the cover layer (12) has a lower stiffness than the carrier layer (16) and/or the lenticular lens layer (14).

3. The lenticular lens assembly (10) according to claim 1 or 2,
wherein the cover layer (12) has a thickness of 0.1 to 0.3 mm and/or wherein the carrier layer (16) has a thickness of 0.5 to 4 mm.

4. The lenticular lens assembly (10) according to any one of the preceding claims,
wherein the cover layer (12) and/or the carrier layer (16) is flat.

5. The lenticular lens assembly (10) according to any one of the preceding claims,
wherein the lenticular lens layer (14) is materially bonded to the cover layer (12) via the filler material.

6. The lenticular lens assembly (10) according to any one of the preceding claims,
wherein a space (Z) between the cover layer (12) and the lenticular lens layer (14) is free of solid and free of fluid material in some regions.

7. The lenticular lens assembly (10) according to any one of claims 1 to 5,
wherein a space (Z) between the cover layer (12) and the lenticular lens layer (14) is filled, at least in some regions, with the filler material of which the refractive index is below a refractive index of the lenticular lens layer (14).

8. The lenticular lens assembly (10) according to any one of the preceding claims,
wherein the cover layer (12) is arranged at a distance (A) from the lens portions (22).

9. A method for producing a lenticular lens assembly (10) according to any one of the preceding claims, wherein
- a lenticular lens layer (14) is provided which comprises a first surface (20) having a plurality of curved lens portions (22) and a second surface (18) facing away from the first surface (20);
- a carrier layer (16) is provided which faces a second surface (18) of the lenticular lens layer (14) at least in some regions;
- a filler material is arranged on the first surface (20);
- a cover layer (12) is arranged to face the first surface (20) of the lenticular lens layer (14) at least in some regions such that the filler material is arranged between the lenticular lens layer (14) and the cover layer (12);
wherein the lenticular lens layer (14), the cover layer (12) and the carrier layer (16) are connected to each other;
wherein, when attached to the display area (100) and after removal of the cover layer, the filler material is designed to provide an adhesive effect of the lenticular lens assembly (10) to the display area (100).

10. The method according to claim 9,
- attaching the produced lenticular lens assembly (10) to a display area (100), wherein, after removal of the cover layer, the filler material is attached to the display area (100) and an adhesive effect of the lenticular lens assembly (10) to the display area (100) is provided.

11. The method according to claim 9 or 10,
wherein a plurality of structurally identical lenticular lens assemblies (10) are produced and at least a first and a second display area (100) are provided;
wherein one of the lenticular lens assemblies (10) is attached to the first display area (100) such that a side of the assembly (10) from which the cover layer (12) has been removed faces the display area (100); and
wherein another of the lenticular lens assemblies (10) is attached to the second display area (100) such that the carrier layer (16) faces the display area (100).

## Revendications

1. Ensemble lentille lenticulaire (10) préfabriqué destiné à être monté sur une surface d'affichage (100) avec :
- une couche de lentille lenticulaire (14) qui comprend une première surface (20) avec plusieurs parties de lentille (22) incurvées et une deuxième surface (18) qui est détournée de la première surface (20) ;
- une couche de revêtement (12) qui se situe au moins par endroits en face de la première surface (20) de la couche de lentille lenticulaire (14) ;
- un matériau de remplissage entre la couche de lentille lenticulaire (14) et la couche de revêtement (12) ;
- une couche de support (16) qui se situe au moins par endroits en face de la deuxième surface (18) de la couche de lentille lenticulaire (14) ;
dans lequel la couche de lentille lenticulaire (14), la couche de revêtement (12) et la couche de support (16) sont liées les unes aux autres,
dans lequel le matériau de remplissage est conçu, lors du dépôt sur la surface d'affichage (100) et après le retrait de la couche de revêtement, pour créer un effet d'adhésion de l'ensemble lentille lenticulaire (10) sur la surface d'affichage (100).

2. Ensemble lentille lenticulaire (10) selon la revendication 1,
dans lequel la couche de revêtement (12) est plus fine que la couche de support (16) et/ou la couche de lentille lenticulaire (14), et/ou
dans lequel la couche de revêtement (12) possède une rigidité plus faible que la couche de support (16) et/ou la couche de lentille lenticulaire (14).

3. Ensemble lentille lenticulaire (10) selon la revendication 1 ou 2,
dans lequel la couche de revêtement (12) présente une épaisseur de 0,1 à 0,3 mm et/ou dans lequel la couche de support (16) présente une épaisseur de 0,5 à 4 mm.

4. Ensemble lentille lenticulaire (10) selon l'une des revendications précédentes,
dans lequel la couche de revêtement (12) et/ou la couche de support (16) sont conçues planes.

5. Ensemble lentille lenticulaire (10) selon l'une des revendications précédentes,
dans lequel la couche de lentille lenticulaire (14) est liée par complémentarité des matières à la couche de revêtement (12) via le matériau de remplissage.

6. Ensemble lentille lenticulaire (10) selon l'une des revendications précédentes,
dans lequel un espace (Z) entre la couche de revêtement (12) et la couche de lentille lenticulaire (14) est par endroits exempt de matériau solide et exempt de matériau liquide.

7. Ensemble lentille lenticulaire (10) selon l'une des revendications 1 à 5,
dans lequel un espace (Z) entre la couche de revêtement (12) et la couche de lentille lenticulaire (14) est rempli au moins par endroits avec le matériau de remplissage, dont l'indice de réfraction se situe en-dessous d'un indice de réfraction de la couche de lentille lenticulaire (14).

8. Ensemble lentille lenticulaire (10) selon l'une des revendications précédentes,
dans lequel la couche de revêtement (12) est disposée avec un écart (A) par rapport aux parties de lentille (22).

9. Procédé de fabrication d'un ensemble lentille lenticulaire (10) selon l'une des revendications précédentes, dans lequel
- une couche de lentille lenticulaire (14), qui comprend une première surface (20) avec plusieurs parties de lentille (22) incurvées et une deuxième surface (18) qui est opposée à la première surface (20), est fournie ;
- une couche de support (16), qui se situe au moins par endroits en face d'une deuxième surface (18) de la couche de lentille lenticulaire (14), est prévue ;
- un matériau de remplissage est disposé sur la première surface (20) ;
- une couche de revêtement (12) est disposée au moins par endroits en face de la première surface (20) de la couche de lentille lenticulaire (14) de sorte que le matériau de remplissage est disposé entre la couche de lentille lenticulaire (14) et la couche de revêtement (12) ;
dans lequel la couche de lentille lenticulaire (14), la couche de revêtement (12) et la couche de support (16) sont liées les unes aux autres,
dans lequel le matériau de remplissage est conçu, lors du dépôt sur la surface d'affichage (100) et après le retrait de la couche de revêtement, pour créer un effet d'adhésion de l'ensemble lentille lenticulaire (10) sur la surface d'affichage (100).

10. Procédé selon la revendication 9,
- mise en place de l'ensemble lentille lenticulaire (10) fabriqué sur une surface d'affichage (100), dans lequel le matériau de remplissage est déposé sur la surface d'affichage (100) après le retrait de la couche de revêtement et crée un effet d'adhésion de l'ensemble lentille lenticulaire (10) sur la surface d'affichage (100).

11. Procédé selon la revendication 9 ou 10,
dans lequel une multiplicité d'ensembles lentille lenticulaire (10) de même construction est créée et au moins une première et une deuxième surface d'affichage (100) sont fournies ;
dans lequel l'un des ensembles lentille lenticulaire (10) est déposé sur la première surface d'affichage (100) de telle manière qu'un côté de l'ensemble (10) auquel on a retiré la couche de revêtement (12) se situe en face de la surface d'affichage (100) ; et
dans lequel un autre des ensembles lentille lenticulaire (10) est déposé sur la deuxième surface d'affichage (100) de telle manière que la couche de support (16) se situe en face de la surface d'affichage (100).
